# EUROPEAN PATENT APPLICATION

(11) **EP 0 981 225 A1**
(43) Date of publication of application: **23.02.2000**
(21) Application number: 98955970.3
(22) Date of filing: 27.11.1998
(51) Int. Cl.: H04L 12/40

(54) **DATA COMMUNICATION METHOD AND ELECTRONIC DEVICE, AND PROGRAM SUPPLYING MEDIUM FOR SUPPLYING DATA COMMUNICATION PROGRAM**

(30) Priority: 10.12.1997 JP 33971197
(71) Applicant: Sony Corporation, Tokyo 141-0001 (JP)
(72) Inventor: KAWAMURA, Harumi Sony Corporation, Tokyo 141-0001 (JP); KOJIMA, Takashi Sony Corporation, Tokyo 141-0001 (JP)
(74) Representative: Ayers, Martyn Lewis Stanley
(86) International application number: JP9805356
(87) International publication number: WO9930463

(57) **Abstract**

There is provided a communication system in which asynchronous file data which is not required to be real-time data and which is exemplified by still picture data, text data or program files outputted by a data source block 11 of a source equipment 10 or asynchronous file data such as low bitrate audio data or video data is written in a memory 13 and transmitted by a processor 12 to a 1394 interface 14. The 1394 interface 14 stores this asynchronous file data in an asynchronous packet and transmits the stored data to a destination equipment 20.

## Description

### Technical Field

This invention relates to a system interconnecting plural electronic equipments over a bus capable of transmitting isochronous packets and asynchronous packets for having communication between these plural electronic equipments. More particularly, it relates to a technique of transmitting asynchronous file data, such as still picture data, using the asynchronous packets.

### Background Art

Such a system is schemed in which electronic equipments, such as a digital video cassette recorder, a television receiver or a personal computer, are interconnected over a 1394 bus, conforming to a standard for IEEE Std. 1394-1995: IEEE Standard for a High performance Serial Bus authorized by the IEEE (Institute of Electrical and Electronics Engineers) and in which data such as video or audio data and control signals such as operation control commands or connection control commands for the electronic equipments are exchanged between the electronic equipments.

In such system in which plural electronic equipments are interconnected over the 1394 bus, transmission of data or control signals is executed by time-divisional multiplexing at a pre-set communication cycle, such as every 125 µs. This transmission is started by an equipment termed a cycle master sending out a cycle start packet, indicating start of a communication cycle, over the 1394 bus.

There are two configurations of communication in one communication cycle, that is isochronous communication (Iso) of transmitting video data, audio data etc in real time and an asynchronous communication (Async) of non-periodically transmitting control signals, such as operation control commands or connection control commands, when the necessity arises. An Iso packet is transmitted earlier than the Async packet. In the Iso communication, channel numbers 1, 2, 3, ··· , n are attached to the respective Iso packets to make distinction between plural Iso data. On the other hand, the Async communication is carried out during a time period since the end of transmission of all Iso packets to be transmitted until sending out of the next start packet.

A control signal with which a given equipment on the 1394 bus demands an operation of another equipment on the 1394 bus when transmitting an AV/C (Audio Video/Control) command for controlling the so-called AV equipment is called a command. The equipment transmitting this command is termed a controller, while another equipment receiving this command is called a target. The target returns a response, which is a control signal representing the results of execution of the command, to the controller. The equipment generating data is termed a source equipment and an equipment receiving this data is termed a destination equipment. Which of the source equipment and the destination equipment is to be a controller in transmitting data from the source equipment to the destination equipment is determined in dependence upon the particular application. There are occasions wherein, in transmitting data from the source equipment to the destination equipment, an equipment excluding the source equipment or the destination equipment and which is connected to the 1394 bus, serves as a controller. Which of the equipments serves as the controller is determined in dependence upon the particular application.

In transmitting data in real time using Iso packets, the source equipment transmits data to the Iso channel designated by the output plug control register (OPCR), as prescribed in IEC (International Electrotechnical Commission) 61883. In order for the source equipment to output data, a data transmission route needs to be established within the source equipment. Thus, in the source equipment, connection is provided between a source plug of a subunit serving as a data source and an output plug of a unit. The AV/C unit plug is associated with the plug control register (PCR). Therefore, if, when the above-mentioned inner connection is provided, data is outputted to a subunit source plug of a subunit, the source equipment sends out data via unit output plug to the 1394 bus, thus realizing Iso transmission.

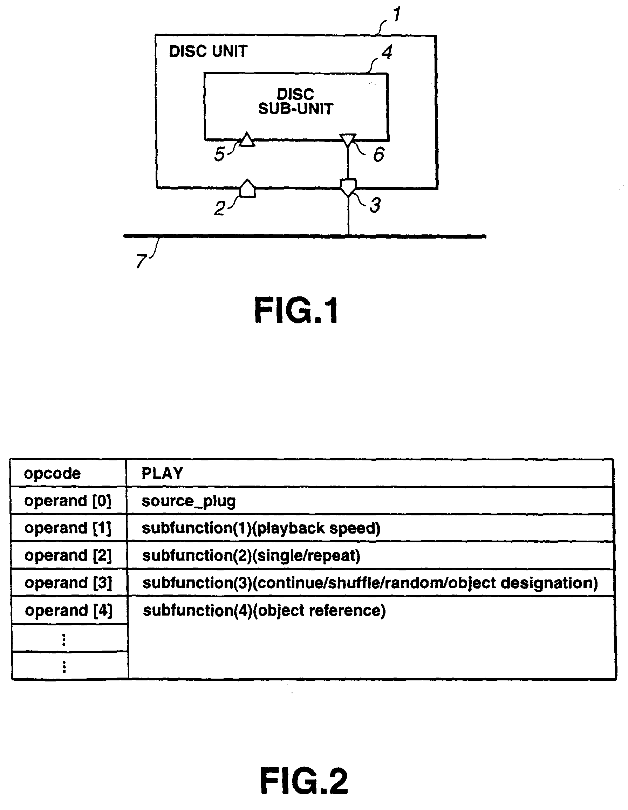

Taking an example of the disc unit 1 connected to the 1394 bus 7 shown in Fig. 1, the concept of outputting the Iso data from the subunit source plug 6 is explained. In the following explanation, the "unit" logically denotes an assembly of physically existing equipments, while the "subunit" is a lower order concept of the unit and denotes an assembly of logical functions of the equipments. The unit and the subunit indicate the concepts denoting the hardware and the software of the equipments.

The disc unit 1 is provided with a unit input plug 2 and a unit output plug 3 serving as plugs indicating logical input/output for data. The disc unit 1 has an internal disc subunit 4 which is provided with a subunit destination plug 5 and a subunit source plug 6 operating as logical plugs for data input/output.

A controller, not shown, specifies a subunit source plug to which data is desired to be outputted, herein the a subunit source plug 6, and sends a playback command to this subunit source plug 6. Meanwhile, it is assumed that an internal connection is provided from the subunit source plug 6 to the subunit destination plug 5.

The playback command is configured as shown in Fig.2. If, for example, data is desired to be reproduced from the leading end of the disc, the number of the output source plug (source_plug) and, for usual reproduction, a 1-ple playback speed, single and continuous, are specified as a sub-function.

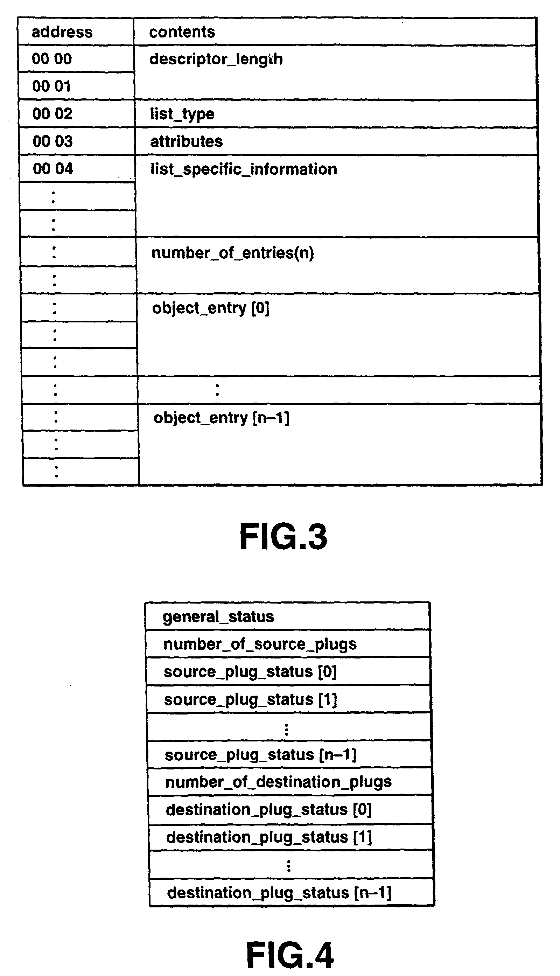

In the AV/C disc model, a contents list is furnished. This contents list is the information concerning each selectable AV/C object, such as an audio number, a sole video program or a sole still picture, stored in a memory, not shown, in the from of an object list descriptor configured as shown in Fig.3. Meanwhile, the object list is the same model as an object list (Multiplex, Service, Component Lists) in a tuner subunit, not shown.

The controller can specify not only the above-mentioned playback command but also an object desired to be reproduced. In this case, the sub-function (3) in the playback command is specified as "object-specified" and, in the sub-function (4), the particular object is specified. To the subunit source plug 6, data is outputted only during the period the specified object is being reproduced. In the AV/C disc model, which object is being outputted to the subunit source plug 6 can be known as the plug status (plug-status) information in the AV/C subunit status descriptor configured as shown in Fig.4.

Although an example of audio data is shown here, asynchronous file data, such as still pictures, can be handled in the same manner in the configuration of outputting Iso packets as a datastream.

In the above-described system in which plural electronic equipments are interconnected over the 1394 bus, it has been schemed to transmit, for example, asynchronous file data not in need of real-time transmission, exemplified by still pictures, text data, bit map data, program files, low bit rate audio or video data, referred to hereinafter as asynchronous file data.

In such system, it is possible to hold a list of selectable asynchronous file data as the above-mentioned object list in the electronic equipment and to transmit the selected asynchronous file data using Iso packets.

However, the asynchronous file data differ from the data stream not required to be real-time, such as usual audio or video data, in that it is low in data volume. Thus, in the system comprised of plural electronic equipments interconnected over the 1394 bus, it is not meritorious to transmit the asynchronous file data by Iso communication.

Although it may be schemed to transmit asynchronous file data by Async communication, such method, exiting as a computer protocol, has not been provided as a protocol for an electronic equipment, such as an AV equipment.

### Disclosure of the Invention

In view of the above-described status of the art, it is an object of the present invention to provide a data communication method and an electronic equipment for transmitting data by Async communication. It is another object of the present invention to provide a program purveying medium for purveying a data communication program for transmitting data by Async communication.

For accomplishing the above object, the present invention provides a data communication method for having communication between a plurality of electronic equipments interconnected over a bus accommodating isochronous communication transmitting data at a predetermined period and asynchronous communication transmitting data asynchronously, including transmitting a series of data lying across a plurality of packets by the asynchronous communication.

With the above data communication method according to the present invention, a series of data lying across plural packets are transmitted by asynchronous communication over a bus accommodating both isochronous communication and asynchronous communication.

For accomplishing the above object, the present invention also provides a data communication method for having communication between a plurality of electronic equipments interconnected over a bus accommodating isochronous communication transmitting data at a predetermined period and asynchronous communication transmitting data asynchronously, including transmitting asynchronous file data not required to be real-time data by the asynchronous communication.

With the above data communication method according to the present invention, the asynchronous file data not required to be real-time data is transmitted by asynchronous communication over a bus accommodating both isochronous communication and asynchronous communication.

For accomplishing the above object, the present invention also provides a set of electronic equipments interconnected over a bus accommodating isochonous communication transmitting data at a predetermined period and asynchronous communication transmitting data asynchronously, including data generating means for generating the data, and an interface for outputting the data as a series of data lying across plural packets and for receiving a series of data lying across the plural packets, the data generated by the data generating means being sent out via the interface to the bus by the asynchronous communication as a series of data lying across plural packets.

With the above electronic equipment according to the present invention, a series of data lying across plural packets are sent out by asynchronous communication to a bus accommodating isochronous communication and asynchronous communication.

For accomplishing the above object, the present invention also provides a set of electronic equipment interconnected over a bus accommodating isochronous communication transmitting data at a predetermined period and asynchronous communication transmitting data asynchronously, including data generating means for generating asynchronous file data not requiring to be real-time data and an interface outputting the asynchronous file data over the bus and receiving the asynchronous file data, the asynchronous file data generated by the data generating means being sent out via the interface by the asynchronous communication to the bus.

With the above electronic equipment according to the present invention, the asynchronous file data not required to be real-time data is sent out by asynchronous communication to a bus accommodating isochronous communication and asynchronous communication.

For accomplishing the above object, the present invention further provides a program furnishing medium for furnishing a data communication program for causing communication to be had between plural electronic equipments interconnected over a bus accommodating isochronous communication transmitting data at a predetermined period and asynchronous communication transmitting data asynchronously, including processing of transmitting a series of data lying across plural packets by the asynchronous communication based on the attribute information of the electronic equipment.

With the above program furnishing medium furnishing a data communication program according to the present invention, a series of data lying across plural packets are transmitted by asynchronous communication based on the attribute information of the electronic equipments in accordance with the attribute information of the electronic equipments.

### Brief Description of the Drawings

Fig.1 shows the concept of outputting of data from a sub-unit source plug of a disc sub-unit.
Fig.2 shows the structure of a playback command.
Fig.3 shows the structure of an object list descriptor.
Fig.4 shows a general structure of a subunit status descriptor.
Fig.5 is a block diagram showing the structure of a communication system embodying the present invention.
Fig.6 shows an object that can be selected in a data source block.
Fig.7 shows the relation between an Async communication plug in an AV/C model on one hand and a unit and a sub-unit on the other hand.
Fig.8A shows typical contents of a subunit status descriptor describing Async data.
Fig.8B shows typical contents of a subunit status descriptor describing audio data.
Fig.9 shows the manner in which audio data is being outputted from the subunit source plug of a data source block and associated still picture data is simultaneously outputted to a memory space.
Fig.10 shows the manner in which certain picture data of still picture data recorded on a disc in a data source block is being outputted to the memory space.
Fig.11 shows the sequence in which a destination equipment reads out data from a source equipment.
Fig.12 is a flowchart showing a portion of the processing when the source equipment advises a destination equipment of feasibility of readout of Async data.
Fig.13 is a flowchart indicating a portion of the balance of the processing when the source equipment advises a destination equipment of feasibility of readout of Async data.
Fig.14 shows a system in which a control equipment is connected to a 1394 bus.
Fig. 15 shows the structure of a command issued by a control equipment to a destination equipment for starting readout from a source equipment.
Fig. 16 shows the sequence of data writing from the source equipment to the destination equipment.
Fig. 17 shows a system in which the control function is comprised in the source equipment.
Fig.18 shows a system in which the control function is comprised in the destination equipment.

### Best Mode For Carrying Out the Invention

Referring to the drawings, preferred embodiments of the present invention will be explained in detail.

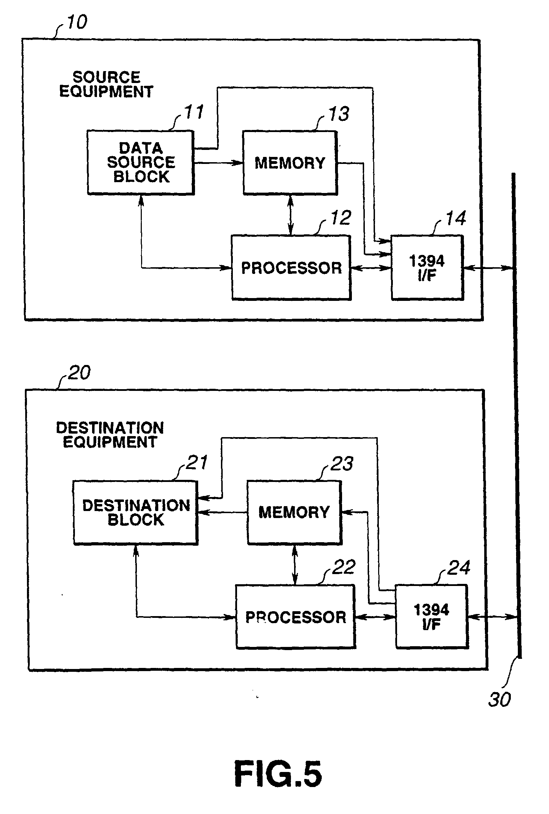

Fig.5 shows a communication system, embodying the present invention, in which a source equipment 10 and a destination equipment 20 are interconnected over a 1394 bus 30. In this communication system, audio data, still picture data etc can be transmitted from the source equipment 10 to the destination equipment 20. The destination equipment 20 also operates as a controller.

The source equipment 10 has, in its inside, a data source block 11, a processor 12, a memory 13 and a 1394 interface (1394 I/F) 14.

The data source block 11, as data generating means, generates the above-mentioned audio data, still picture data, etc. The processor 12 controls the source equipment 10 in its entirety. The processor 12 also operates as means for securing a memory space, into which to output data, in a memory 13 as later explained. The memory 13 as storage means is constituted by, for example, a random access memory (RAM) and includes an area in which to write still picture data generated by the data source block 11. In this memory 13 is secured a memory space as later explained so that data is outputted therein. The 1394 interface 14 stores still picture data read out by the processor 12 from the memory 13, still picture data directly read out from the memory 13, a variety of commands or responses prepared by the processor 12 in an Async packet to send out the stored still picture data etc to an 1394 bus 30. The 1394 interface 14 stores audio data generated by the data source block 11 in an Iso packet to send out the stored audio data to the 1394 bus 30. The 1394 interface 14 also retrieves various commands or responses from the Async packet sent out by the destination equipment 20 to the 1394 bus 30 to send the retrieved commands etc to the processor 12.

Similarly to the source equipment 10, the destination equipment 20 has, in its inside, a destination block 21, a processor 22, a memory 23 and a 1394 interface (1394I/F) 24.

In the 1394 interface 24, the source equipment 10 receives Async packet sent out by the source equipment 10 to the 1394 bus 30. The 1394 interface 24 separates still picture data, various commands or responses from the Async packet to send the separated commands etc to the processor 22. The 1394 interface 24 also receives the Iso packet sent by the source equipment 10 to the 1394 bus 30 to separate the audio data therefrom to send the separated audio data to the destination block 21. In the destination equipment 20, the received still picture data is written from the 1394 interface 24 into the memory 23 directly or via processor 22. The processor 22 interprets the various commands or responses to execute associated processing operations. The processor 22 also controls the present destination equipment 20 in its entirety. The memory 23 is constituted by, for example, a RAM, and stores the received still picture data etc. The destination block 21 is, for example, a printer, and retrieves still picture data from the memory 23 to execute various processing operations.

The above-described source equipment 10 and the destination equipment 20 are provided with input units, such as a keyboard or a remote commander, for the user to input various commands, and a display, not shown.

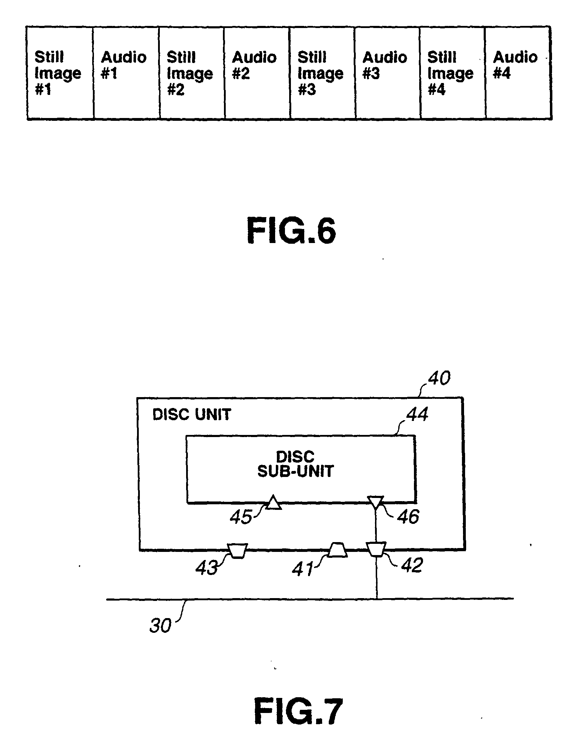

An object selectable in the data source block 11 shown in Fig.5 is shown for example in Fig.6. That is, in the data source block 11, four still picture data (still images #1 to #4) and four associated audio data (Audio #1 to #4) can be selected.

Such a system is here proposed, in which the mechanism of data selection and outputting of the Iso communication in the AV/C model can be applied unchanged to the Async communication. The unit and the subunit in the following description logically mean an assembly of physically existing equipments and an assembly for realization of the logical functions of the equipments, and is a concept which encompasses the physical hardware and the software of the equipments. The plug logically means a data exit/entrance.

If a disc carrying still pictures of Async data attached to each musical number of audio data composed of Iso data, as shown for example in Fig.6, is reproduced, and a disc player used for reproduction is not provided with the still picture displaying function, only audio data is outputted to the subunit plug. If, for example, an equipment capable of displaying a still picture is connected to the 1394 bus 30, there is required a system for retrieving Async data of the disc.

The system for retrieving the Async data in the AV/C model is shown in Fig.7. That is, a disc unit 40 in the source equipment 10 and the destination equipment 20 includes a plug for Async communication in addition to a unit Iso communication output plug 43 for Iso communication. The source equipment 10 and the destination equipment 20 exchange data on the 1394 bus 30 via a unit Async communication input plug 41or a unit Async communication output plug 42. The disc subunit 44 in the disc unit 40 has the subunit destination plug 45 and the subunit source plug 46. In the source equipment 10, the subunit source plug 46 of the disc subunit 44 is connected to the unit Async communication output plug 42, as an example, to send a still picture selected by the subunit source plug 46 over the 1394 bus 30 via unit Async communication output plug 42. In the destination equipment 20, the unit Async communication input plug 41 is connected to the subunit destination plug 45 to retrieve Async data on the 1394 bus 30 via unit Async communication input plug 41 to the subunit destination plug 45.

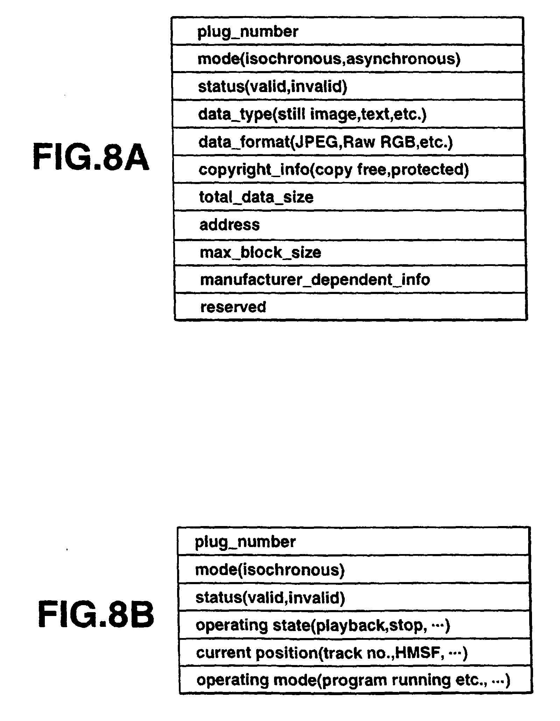

In the source equipment 10, a subunit status descriptor representing the attribute information of an equipment is provided in the memory 13. This subunit status descriptor is configured as shown for example in Fig.8A and 8B. The descriptor for Async data and that for audio data are configured as shown in Figs.8A and 8B, respectively.

In these subunit status descriptors, if the still picture data shown in Fig.6 is outputted along with audio data from the subunit source plug #0 of the data source block 11, the plug_number shown in Fig.8A and that shown in Fig. 8B are both #0. In Fig.8A, the mode is "asynchronous" since here the still picture data is Async data. If the still picture data is sent as Iso data, the mode is set to "isochronous". The mode in Fig.8B is "isochronous" because the audio data is Iso data. The status (status) in Figs.8A and 8B specifies whether data outputted by the source plug is valid or invalid.

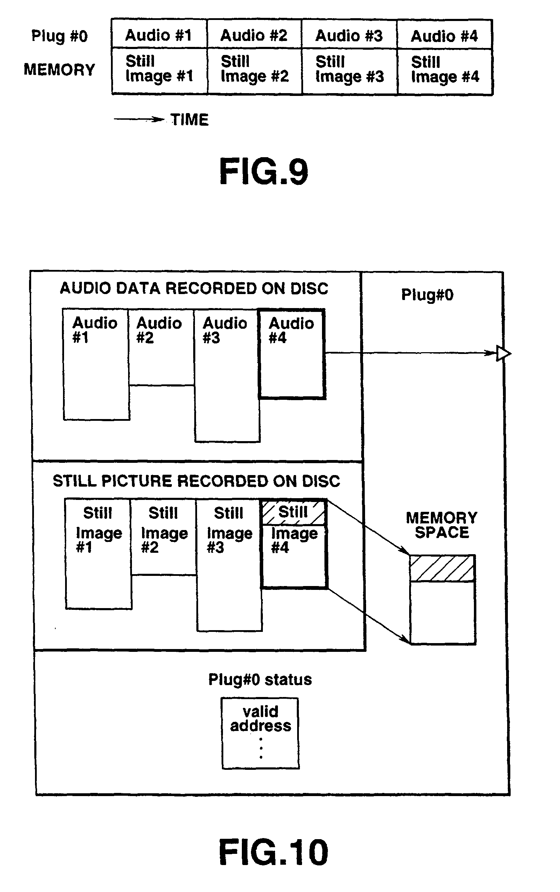

Fig.9 shows how audio data #1, #2, #3 and #4 are simultaneously outputted by the subunit source plug #0 of the data source block 11,to the memory space secured in the memory 13, for example, with associated still picture data #1, #2, #3 and #4 being simultaneously outputted to the memory space. As shown therein, the still picture data, as Async data, are accessed using a memory space. This memory space has an addressing structure in the IEEE 1394 standard such that only a selected object can be accessed in this memory space. An object is selected by designating a data-outputting source plug. It is therefore possible in the source equipment 10 to have this memory space from one subunit source plug to another.

Fig. 10 shows that the still picture data #4 recorded on the disc in the data source block 11 is being outputted to the memory space. Fig. 10 also shows that the audio data #4, simultaneously outputted with the still picture data #4, is being outputted from the subunit source plug #0 by the Iso communication. That is, while the audio data #4 associated with the still picture data #4 is outputted by Iso communication by the subunit source plug #0, accessing from outside to the still picture data #4 recorded on the disc is inhibited, so that, for accessing to this still picture data #4, a copy of the still picture data #4 is outputted to the memory space which represents an accessible area. Meanwhile, the still picture data #4 may also be outputted in a split form to the memory space. This split copied area is shown shaded in Fig.10. It is noted that the memory space presents itself only when accessing from outside is allowed. Also, if, in the source equipment 10, copy-protected data is selected, accessing from outside is inhibited, thus presenting no memory space.

The information on an object outputted to the memory space and which is rendered accessible is stated in the plug status of the subunit status descriptor, as shown in Fig.8A. The address in Fig.8A specifies the leading address in the memory space, that is the address on the IEEE 1394 standard, while the total_data_size specifies the total data size of this object. The max_block_size specifies the number of bytes that can be sent in one packet from the source equipment 10. The memory space is effective only when the status field is ^{"}valid", while being not guaranteed if the status field is "invalid".

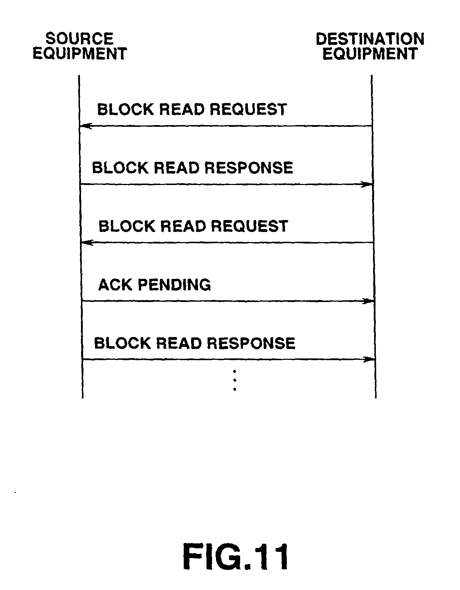

The destination equipment transmits a 1394 block read packet to the source equipment 10, based on the information of this subunit status descriptor, to receive its response, as shown in Fig.11. This enables the destination equipment 20 to read out data from the source equipment 10.

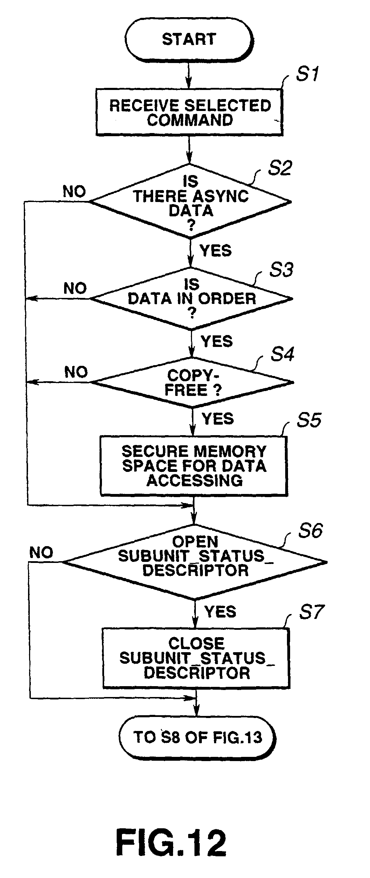

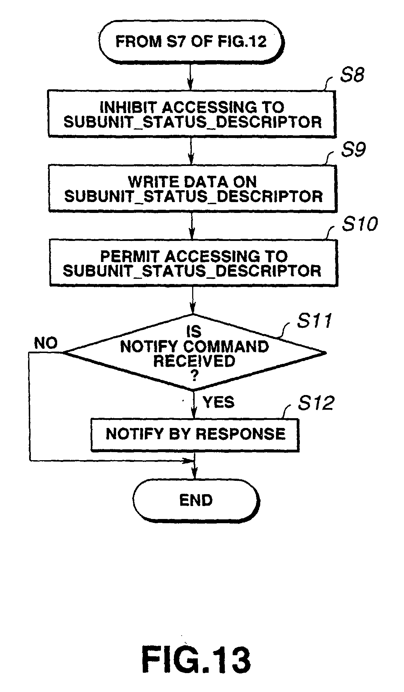

Referring to Figs. 12 and 13, a series of operations used when the source equipment 10 advises the destination equipment 20 of feasibility of readout of Async data is explained with reference to Figs.12 and 13.

First, at step S1, the source equipment 10 receives an object selection command transmitted by the destination equipment 20. It is assumed that, in making object selection, the destination equipment 20 accesses the memory 13 of the source equipment 10 in advance to read out the stored object list descriptor.

At step S2, the source equipment 10 compares an object selected by the selection command to an own object list to decipher whether data indicated by the selected object contains Async data.

If the source equipment 10 finds that data indicated by the selected object contains Async data, it deciphers at step S3 whether data to be written in the memory space secured at step S6 as later explained is in order. If the data is in order, the source equipment 10 deciphers at step S4 whether or not the data is copy-free. If the data is copy-free, the source equipment 10 secures at step S5 a memory space for data accessing.

The source equipment 10 then deciphers at step S6 whether or not the subunit status descriptor is opened. If the subunit status descriptor is opened, the source equipment 10 compulsorily closes the subunit status descriptor at step S7 and subsequently inhibits at step S8 the accessing to the subunit status descriptor from outside. If the subunit status descriptor is not opened, the source equipment 10 at step S8 directly inhibits the accessing to the subunit status descriptor from outside.

By so doing, the destination equipment 20, as a control equipment, can recognize the fact that the subunit status descriptor being accessed is incomplete thus avoiding the risk of reading out mistaken data.

The source equipment 10 at step S9 writes data in the subunit status descriptor. If, at step S5, the memory space is secured, the source equipment 10 writes various data shown in Fig.8A in the subunit status descriptor. If the memory space is not secured, that is if Async data is found at step S2 not to be contained in the data indicated by the selected object, data is found at step S3 not to be in order, or if data is not found at step S4 to be copy-free, the source equipment 10 records "invalid" in a status field of Fig.8A. After the source equipment 10 writes data in the subunit status descriptor, the source equipment 10 permits accessing from outside to the subunit status descriptor.

The source equipment 10 at step S11 deciphers whether or not a notification command (notify) has been received from the destination equipment 20. The notification command indicates that, if the contents of the subunit status descriptor are changed, that effect should be notified. If, when the destination equipment 20 is reading out still picture data by a 1394 block read packet, the still picture data are changed, the source equipment 10 which has received this command sets at step S12 the status field of the subunit status descriptor to "invalid". The source equipment 10 also notifies to the destination equipment 20 by a response to the effect that the still picture data has been changed to terminate a sequence of operations.

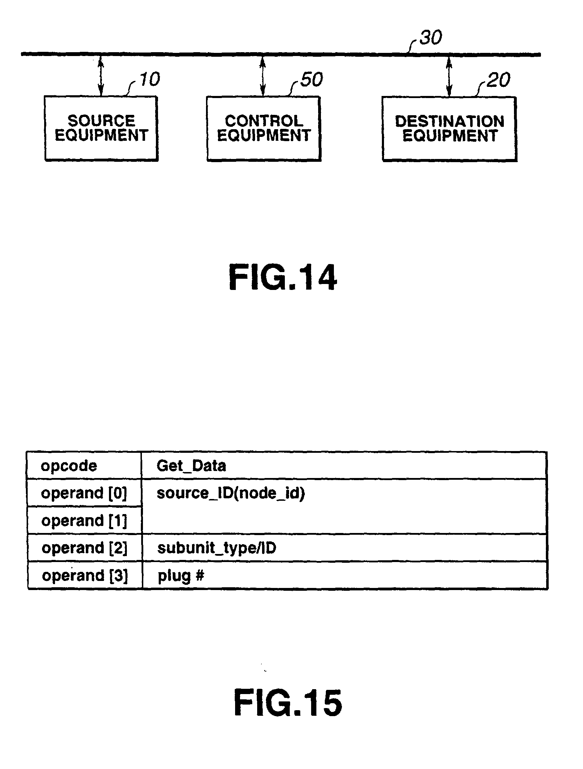

The foregoing description refers to the case of the destination equipment 20 operating as a controller. Next, a case in which a control equipment 50, connected to the 1394 bus 30, operates as a controller, as shown in Fig. 14, is hereinafter explained.

First, the control equipment 50 issues to the destination equipment 20 an AV/C command for starting the readout from the source equipment 10. The AV/C command is configured as shown in Fig.15.

On reception of this command, the destination equipment 20 issues to the subunit in the source equipment 10 a command (OPEN DESCRIPTOR command) in order to acquire an accessing right to the subunit status descriptor of the specified subunit of the source equipment 10. The destination equipment 20 issues a readout command (READ DESCRIPTOR command) to read out the subunit status descriptor in order to read out the information of the specified subunit status descriptor. Also, the destination equipment 20 retrieves data from the source equipment 10, by exchanging 1394 block read packets and responses shown in Fig.11, based on the information such as addresses or data sizes, written in the subunit status descriptor.

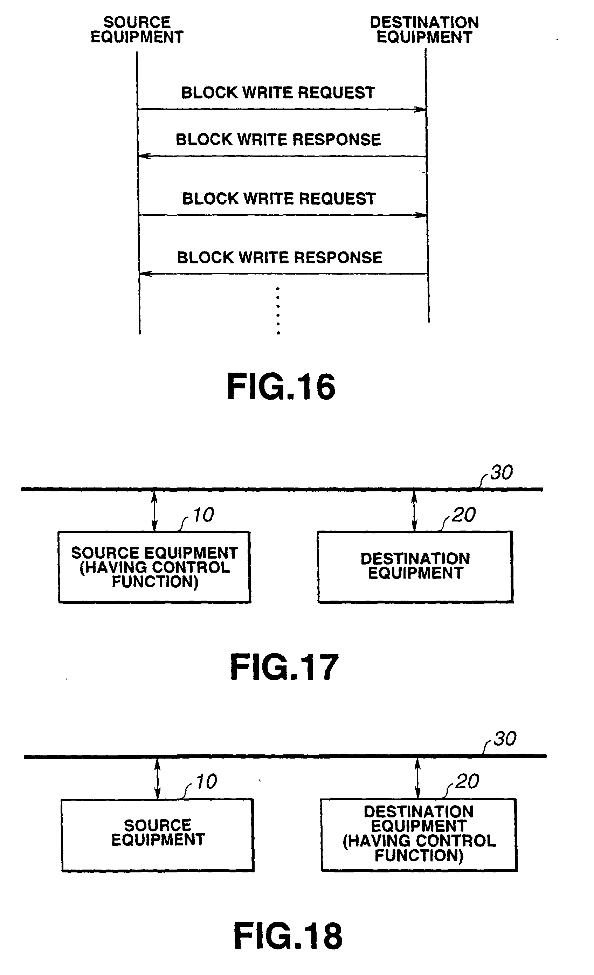

It is also possible for the destination equipment 20 to retrieve data from the source equipment 10 by exchanging responses and 1394 block write packets from the source equipment 10 shown in Fig.16.

Thus, in the communication system interconnecting the source equipment 10 and the destination equipment 20, the concept of an input/output controlling plug applied to the Iso data of the AV/C command model to the Async data to handle the Async data in the same manner as the Iso data in order to enable transmission/reception of Async data between the source equipment 10 and the destination equipment 20. Also, since the above-described communication system can have direct access to the IEEE 1394 memory address space, it is possible to read out data larger in volume than the 512 byte command register area. Moreover, with the above-described communication system, the destination equipment 20 reads out data from the source equipment 10 to relieve the load otherwise imposed on the source equipment 10.

Next, countermeasures for copyright protection are explained. The copyright poses a crucial problem when handling the AV/C data. Although the rules for copyright protection has substantially been set as for Iso transmission, the corresponding rules for Async transmission are lacking at present. Thus, accessing is permitted only for copy-free data and, if data other than the copy-free data is selected or reproduced, the source equipment 10 "invalidates" the memory space. This enables accommodation to future prescription of the corresponding rules. For authorization, it may be contemplated to exchange decryption keys by exploiting node IDs on the 1394 bus 30 of an equipment , for which the subunit status descriptor has been opened. If encryption is applied, clear data are subdivided into finer blocks in order to permit decrypted data to be accessed in the memory space.

By so doing, it is possible with the present communication system to accommodate future provisions for copyright protection for Async data,

In the above-described communication system, the program for having the above-described subunit Async communication can be supplied to the source equipment 10, destination equipment 20 or to an electronic equipment connected to the 1394 bus 30, such as control equipment 50, by a recording medium, such as CD-ROM.

In the above description of the communication system, the control function is built into the destination equipment 20, as shown in Figs.1 and 17, or the control equipment 50 is an equipment different from the source equipment 10 or the destination equipment 20, as shown in Fig. 14. This invention is, however not limited to these embodiments and the control function can also be built into the source equipment 10, as shown for example in Fig.18. In such case, communication is between the two equipments, that is the source equipment 10 and the destination equipment 20.

Also, in the above description, both the still picture data and the audio data are selected. According to the present invention, only still picture data can be selected, in which case the plug for designating an object is "plug invalid", as an example, since Iso data is not outputted from the data source block 11.

In addition, according to the present invention, plural still picture data can be outputted simultaneously, in which case plural memory spaces are secured in association with still picture data.

The data that can be handled in the present invention is not limited to the above-mentioned still picture data. For example, it is possible to handle text data, asynchronous file data not required to be real-time, exemplified by a program file, or asynchronous file data, such as low-bit rate audio data or video data. Thus, the present invention can be modified in a broad latitude without departing from its scope.

### Industrial Applicability

A data communication method according to the present invention, as described above, is such a method in which communication is had between plural electronic equipments interconnected over a bus accommodating isochronous communication transmitting data at a predetermined period and asynchronous communication transmitting data non-periodically, wherein a sequence of data lying across plural packets is transmitted by asynchronous communication.

Thus, with the data communication method of the present invention, a series of data lying across plural packets can be transmitted by asynchronous communication.

The data communication method according to the present invention is such a method in which communication is had between plural electronic equipments interconnected over a bus accommodating isochronous communication transmitting data at a predetermined period and asynchronous communication transmitting data non-periodically, wherein the asynchronous data not required to be in real time is transmitted by asynchronous communication.

Thus, with the data communication method of the present invention, the asynchronous file data not required to be in real time can be transmitted/received by asynchronous communication.

An electronic equipment according to the present invention is such an equipment interconnected with other electronic equipments over a bus accommodating isochronous communication transmitting data at a predetermined period and asynchronous communication transmitting data non-periodically, wherein the electronic equipment has data generating means for generating data and an interface for receiving a series of data lying across plural packets, the data generated by the data generating means being sent out to a bus by asynchronous communication as a series of data across plural packets via an interface.

Thus, with the electronic equipment according to the present invention, a series of data across plural packets can be sent out by asynchronous communication over a bus accommodating both isochronous communication and asynchronous communication.

The electronic equipment according to the present invention is also such an equipment interconnected with other electronic equipments over a bus accommodating isochronous communication transmitting data at a predetermined period and asynchronous communication transmitting data non-periodically, wherein the electronic equipment has data generating means for generating asynchronous file data not require to be in real-time and an interface adapted to output asynchronous file data over a bus and for receiving asynchronous file data, with the asynchronous file data generated by the data generating means being sent out via the interface to the bus.

Thus, with the electronic equipment according to the present invention, asynchronous file data not required to be in real time can be sent out by asynchronous communication to the bus accommodating isochronous communication and asynchronous communication.

A program-purveying medium for purveying a data communication program according to the present invention is such a medium which purveys a data communication program between plural electronic equipments interconnected with other electronic equipments over a bus accommodating isochronous communication transmitting data at a predetermined period and asynchronous communication transmitting data non-periodically, wherein a series of data lying across plural packets are transmitted by asynchronous communication based on the attribute information of the electronic equipments.

Thus,the program purveying medium purveying a data communication program according to the present invention can purvey to the electronic equipment a data communication program for transmitting a series of data lying across plural packets by asynchronous communication in accordance with the attribute information of the electronic equipment. The electronic equipments fed with the data communication program can transmit a series of data lying across plural packets by asynchronous communication in accordance with the attribute information of the electronic equipment.

## Claims

1. A data communication method for having communication between a plurality of electronic equipments interconnected over a bus accommodating isochronous communication transmitting data at a predetermined period and asynchronous communication transmitting data asynchronously, comprising:
transmitting a series of data lying across a plurality of packets by said asynchronous communication.

2. A data communication method for having communication between a plurality of electronic equipments interconnected over a bus accommodating isochronous communication transmitting data at a predetermined period and asynchronous communication transmitting data asynchronously, comprising:
transmitting asynchronous file data not required to be real-time data by said asynchronous communication.

3. The data communication method according to claim 1 or 2, wherein the electronic transmitting the data secures a memory space in which said data is outputted; and wherein
the electronic equipment receiving the data accesses to said memory space.

4. The data communication method according to claim 3, wherein the electronic equipment transmitting the data stores an object list selectable from an inner data source and wherein
the electronic equipment receiving the data selects said data from said object list.

5. The data communication method according to claim 4, wherein the said data is asynchronous file data not required to be real-time and/or synchronous data required to be real-time; and wherein
if the asynchronous file data selectable from said data source corresponds to said synchronous file data, said asynchronous data is selected simultaneously with selection of said synchronous file data.

6. The data communication method according to claim 4 or 5, wherein the electronic equipment receiving said data can have access in said memory space to data of the selected object.

7. The data communication method according to any one of claims 4 to 6, wherein the electronic equipment transmitting said data secures said memory space if data of the selected object is duplicatable.

8. The data communication method according to any one of claims 3 to 7, wherein the electronic equipment transmitting the data stores the attribute information thereof.

9. The data communication method according to any one of claims 3 to 8, wherein the electronic equipment receiving said data is started by a control equipment connected to said bus.

10. The data communication method according to anyone of the preceding claims wherein data communication is had via an asynchronous communication plug which is a logical plug controlling data input/output at the time of the asynchronous communication.

11. The data communication method according to claim 10, when appendant to claim 1, wherein an asynchronous communication plug provided on the data-transmitting electronic equipment for outputting said data and an asynchronous communication plug provided on the data-receiving electronic equipment for inputting said data are selected and said data is exchanged between said data-transmitting electronic equipment and the data-receiving electronic equipment.

12. The data communication method according to claim 1, or any one of claims 3 to 11 when appendant to claim 1, wherein said data is asynchronous file data not required to be real-time data and or synchronous file data required to be real-time data;
said asynchronous file data including at least one of the still picture data, text data, program files, low bitrate audio or video data;
said synchronous file data including at least one of audio data or video data.

13. The data communication method according to claim 10, when appendant to claim 2, wherein an asynchronous communication plug provided for outputting said asynchronous file data on the electronic equipment adapted for transmitting said asynchronous file data and an asynchronous communication plug provided on the electronic equipment receiving the asynchronous file data for inputting said asynchronous file data are selected and wherein said asynchronous file data is exchanged between the electronic equipment transmitting the asynchronous file data and the electronic equipment receiving the asynchronous file data.

14. The data communication method according to claim 2 or any one of claims 3 to 10 or 13 when appendant to claim 2, wherein
said asynchronous file data includes at least one of the still picture data, text data, program files, low bitrate audio data or video data.

15. The data communication method according to anyone of the preceding claims, wherein said bus conforms to the IEEE 1394 High-Performance Serial Bus standard.

16. A set of electronic equipment interconnected over a bus accommodating isochronous communication transmitting data at a predetermined period and asynchronous communication transmitting data asynchronously, comprising:
data generating means for generating the data; and
an interface for outputting the data as a series of data lying across plural packets and for receiving a series of data lying across the plural packets;
the data generated by said data generating means being sent out via said interface to said bus by said asynchronous communication as a series of data lying across plural packets.

17. A set of electronic equipment interconnected over a bus accommodating isochronous communication transmitting data at a predetermined period and asynchronous communication transmitting data asynchronously, comprising:
data generating means for generating asynchronous file data not requiring to be real-time data; and
an interface outputting said asynchronous file data over said bus and receiving said asynchronous file data;
said asynchronous file data generated by said data generating means being sent out via said interface by said asynchronous communication to said bus.

18. The set of electronic equipments according to claim 16 or 17, further comprising:
securing means for securing a memory space to which said data is outputted from said data generating means.

19. The set of electronic equipments according to claim 18, further comprising:
storage means for storing the information concerning said data;
said data being selected based on said information.

20. The set of electronic equipments according to claim 19, wherein said data is the asynchronous file data not required to be real-time data and/or synchronous file data required to be real-time data; and wherein
if the selectable asynchronous file data corresponds to said synchronous file data, said asynchronous file data is selected with selection of the synchronous file data.

21. The set of electronic equipments according to claim 19 or 20, wherein
said selected data can be accessed from outside in said memory space.

22. The set of electronic equipments according to any one of claims 19 to 21, wherein
said securing means secures the memory space if the selected data is duplicatable.

23. The set of electronic equipments according to any one of claims 18 to 22, further comprising:
storage means having the attributable information stored therein.

24. The set of electronic equipments according to any one of claims 18 to 23, wherein the equipments are started by a control equipment connected to said bus.

25. The set of electronic equipments according to any one of claims 16 to 24, further comprising:
an asynchronous communication plug as a logical plug controlling data inputting/outputting at the time of said asynchronous communication; wherein
said data is transmitted/received via said asynchronous communication plug.

26. The set of electronic equipments according to claim 25, wherein the data-outputting asynchronous communication plug and the data-receiving asynchronous communication plug are selected in order to have the data communication.

27. The set of electronic equipments according to claim 16 or anyone of claims 18 to 26 when appendant to claim 16, wherein said data is asynchronous file data not required to be real-time data and/or synchronous file data required to be real-time data;
said asynchronous file data including at least one of the still picture data, text data, program files, low bitrate audio data or video data;
said asynchronous filed data including at least one of audio or video data.

28. The set of electronic equipments according to claim 17 or any one of claims 18 to 26 when appendant to claim 17 wherein
said asynchronous file data includes at least one of the still picture data, text data, program files, low bitrate audio data or video data.

29. The set of electronic equipments according to anyone of claims 16 to 28, wherein said bus conforms to the IEEE 1394 High-Performance Serial Bus standard.

30. A program furnishing medium for furnishing a data communication program for causing communication to be had between plural electronic equipments interconnected over a bus accommodating isochronous communication transmitting data at a predetermined period and asynchronous communication transmitting data asynchronously, comprising:
processing of transmitting a series of data lying across plural packets by said asynchronous communication based on the attribute information of said electronic equipment.
